Europäisches Patentamt

European Patent Office

Office européen des brevets

(11) Publication number: **0 105 217**
**A2**

## (12) EUROPEAN PATENT APPLICATION

(21) Application number: **83108784.6**

(22) Date of filing: **06.09.83**

(51) Int. Cl.³: **B 23 D 15/06**

(30) Priority: **07.09.82 US 415464**

(43) Date of publication of application: **11.04.84**
**Bulletin 84/15**

(84) Designated Contracting States: **BE CH DE FR GB IT LI SE**

(71) Applicant: **HOUDAILLE INDUSTRIES, INC., 1 Financial Plaza, Fort Lauderdale Florida 33394 (US)**

(72) Inventor: **King, Dennis L., 213 Rounds Avenue, Buffalo New York 14215 (US)**

(74) Representative: **Fleuchaus, Leo, Dipl.-Ing. et al, Fleuchaus & Wehser Melchiorstrasse 42, D-8000 München 71 (DE)**

(54) Control system for blanking center.

(57) A control system for a blanking center incorporates a video display (26) for displaying a non-overlapping arranged series of rectangles (31-36) corresponding to data stored in a memory (20), corresponding to an arrangement of blanks to be cut from a sheet. A keyboard (25, 28) is provided for data entry, by which an operator may determine the sequence of placement of various size rectangles corresponding to blanks to be cut from the sheet.

0105217

CONTROL SYSTEM FOR BLANKING CENTER

DESCRIPTION

The present invention relates to a control system for a blanking center, and more particularly to one which facilitates the setting up of a blanking center preparatory to cutting plural blanks from sheet material by means of a right-angle shears or the like.

It is frequently desirable cut a plurality of different sizes and shapes of rectangular blanks from a larger panel of sheet material, and it is desirable to arrange the pattern of blanks to be cut out from a sheet to minimize the amount of waste material left over after cutting is complete. While such a lay-out operation can be performed manually, for example with pencil and paper, such an operation takes a relatively long time, and is subject to the possibility of the operator making errors in calculation of sizes of the blanks, or errors in lay-out of the blank arrangement.

It is also known to provide automatic computer apparatus which automatically performs the lay-out procedure, to minimize waste left over after a cut-off from a sheet, wherein the specific quantity of blanks of predetermined sizes are desired. However, such operations are relatively expensive and complex.

It is desirable to provide a method and apparatus to enable an operator to easily and conveniently lay out an arrangement of blanks to be cut from a sheet, without the possibility of operator error which could result in undersized blanks, or inefficient usage of the sheet material, by preserving the ability for the operator to determine himself the sequence of placement of various size blanks on the sheet.

It is a principal object of the present invention to provide a control system for a blanking center which enables an operator to individually choose a position of blanks to be cut from sheet material and the arrangement of such blanks. It is a further object of the present invention to provide apparatus for displaying on a video screen an arrangement of blanks selected by the operator, together with the relative orientation of such blanks in relation to the sheet from which they are to be cut.

A further object of the present invention is to provide such an apparatus in which the operator has the facility for placing the initial blank in a selected corner of the sheet, with other blanks placed at selected locations elsewhere on the sheet.

A further object of the present invention is to provide apparatus enabling the operator to selectively rotate the position of the blank relative to the sheet from which it is to be cut.

Another object of the present invention is to provide means for allowing the operator to modify a previously selected arrangement of blanks.

Another object of the present invention is to provide such an apparatus which, at the conclusion of the lay-out of the blank arrangement, is adapted to prepare a tape incorporating a series of instructions for controlling automatically controlled shears for cutting the arranged blanks from sheets.

The present invention achieves the advantage of providing a relatively simple and inexpensive means of programming an arrangement of blanks to be cut from sheet material, which preserves a high degree of flexibility with which the operator can arrange the blanks, and provide a visual indication of the physical arrangement of blanks which is selected, and also an indication of the efficiency utilization of the sheet material from which the blanks are to be cut.

These and other objects and advantages of the present invention will become manifest by an inspection of the following description and the accompanying drawings.

In one embodiment of the present invention, there is provided a control system for blanking center comprising a video display, a video controller for controlling operation of said video display, memory means for storing data corresponding to a sheet and a plurality of blanks to be displayed by said video display under control of said video controller, a control panel for allowing an operator to enter data to be stored in said memory means relative to the size of said sheet and the sizes of said blanks, said control panel incorporating selectively operable means for enabling an operator to translate or rotate blanks on said video screen, or to delete blanks from said video screen, an input-output computer connected to said control panel and to said memory means for storing data in said memory means corresponding to the sheet and blanks displayed on said video screen, said input-output computer also comprises means for providing instructions for the control of an automatic shearing machine to shear blanks from a sheet in accordance with the arrangement displayed on said video display.

The present invention provides a simple and economical means for allowing an operator to lay out an arrangement of blanks to be sheared from sheet material, while maintaining maximum flexibility in the selection and positioning of various sized blanks to be cut from the sheet and enabling the operator to verify the efficiency of utilization of the sheet in accordance with the selected arrangement of blanks to be cut therefrom.

Other objects and advantages of the present invention will be manifest by an inspection of the accompanying drawings and the following description.

Reference will now be made to the accompanying drawings in which:

Fig. 1 is a functional block diagram of apparatus comprising an illustrative embodiment of the present invention;

Figs. 2 through 13 are illustrations of portions of the apparatus which perform various procedures during operation of the apparatus;

Fig. 14 is an illustration of a sheet which may be sheared into blanks by an automatic shear machine; and

Fig. 15 is an illustration of the video display during selection of an arrangement of a plurality of blanks to be sheared from the sheet.

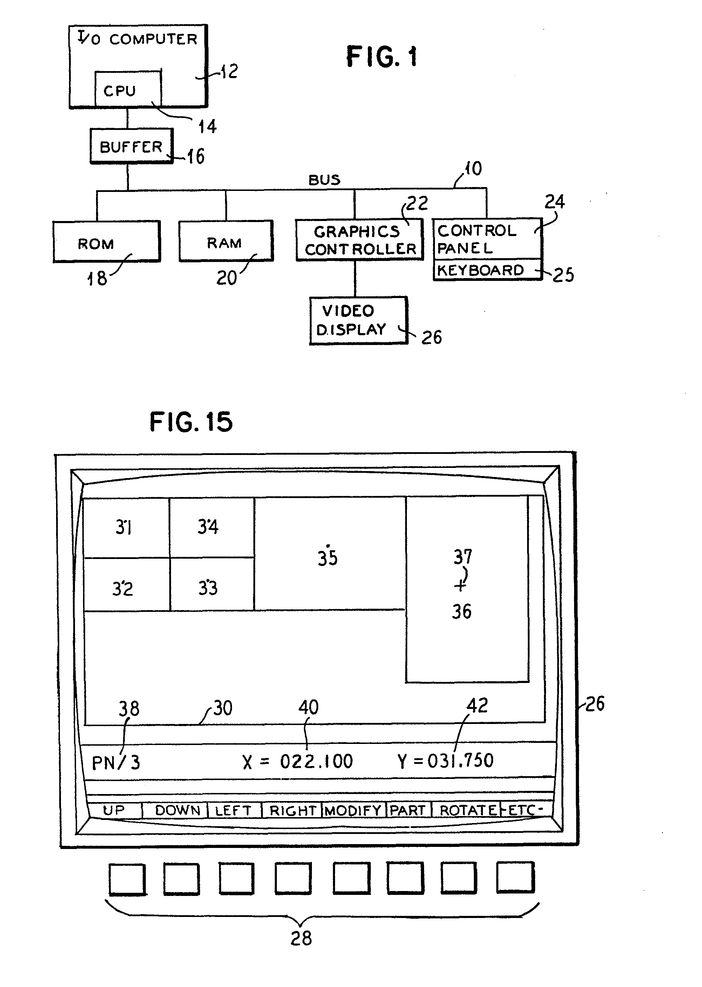

Reference will now be made to Fig. 1 which is a functional block diagram of the system incorporating the present invention.

Referring to Fig. 1, a block diagram of a system incorporating the present invention is illustrated. It comprises a bus 10 which interconnects all of the other units which together form the system. The bus 10 incorporates an address bus, a data bus, and a control bus, so that individual units can be addressed over the address bus and data transmitted to and from such units over the data bus. In addition, a control bus supplies signals to the various units which are required for them to execute their functions at the proper times.

An input-output computer 12 incorporating a CPU 14 is connected to the bus 10 through a buffer unit 16, so that the CPU 14 can furnish control signals over the control bus, as well as appropriate signals over the address and data buses to the other units. Also connected to the bus 10 are a read only memory or ROM 18, a random access memory or RAM 20, a graphics controller 22 and a control panel 24. The graphics controller 22 is connected to a video display unit 26, which supplies a display indicating the size and shape of sheets and blanks arranged on the sheet, and other data including a plurality of soft key designations and other information. The control panel 24 includes a plurality of hardware keys which are associated with the soft keys displayed on the video display 26, so that the hardware keys can execute different functions during different times in a cycle of operation of the apparatus.

Fig. 15 illustrates the video display unit 26 as it appears during one moment of operation of the apparatus, together with the software keys 28 which are disposed directly under the video display unit 26.

On the screen of the video display unit 26 as shown in Fig. 15 there appears a sheet having an outline 30, and a plurality of blanks 31-36. In the condition illustrated in Fig. 15, an arrangement of five blanks 31-35 has been laid out on the sheet 30 with the blank 36 being the last one to be positioned in the arrangement. This is indicated by a cursor signal 37 which appears on the screen within the outline of the blank 36.

Below the representation of the sheet 30, a part number designation appears on the screen at location 38, together with its X dimension at location 40 and its Y dimension at location 42. Near the bottom of the screen, a line of soft key designators appears, which define operation of the keys 28 during this portion of the cycle. As illustrated in Fig. 15, the soft keys at this point in time are represent movement controls of up, down, left and right, which are adapted to define the position of the subject part number, identified at locations 38-42, relative to the reference part 36, identified by the cursor 37. The next soft key is labelled "modify", which, when operated, is adapted to call a "modify" program, which will be described more fully hereinafter. The next soft key designated part, causes a new subject part to be selected, with the new selected part number and dimensions being displayed at locations 38-42. The seventh soft key, designated "rotate", effects a rotation of the current part whose part number and dimensions appear at locations 38-42. The rotation is effected by swapping the X and Y dimensions appearing at locations 40 and 42. The last soft key

0105217

entitled "etc." enables a return to a previously selected program of operations.

During operation, the dimensions of a sheet are typed into the keyboard 25, which dimensions are stored in the RAM 20, under control of the I/O computer 12. An outline of the sheet then appears on the video display 26, under control of the graphics control 22, using the dimensions stored in the RAM 20. The larger of the two dimensions is always used as the X dimension, to provide the best definition for the image appearing on the screen of the video display unit 26.

At this point, a message appears on the video display 26 at locations 38-42, identifying the percentage of the sheet 30 which is used and the percent which is scrapped. At this point, since no blanks have been arranged on the sheet as yet, the scrap is indicated at 100% and the sheet usage indicated at 0%. The soft keys at this time are designated with the names of six programs, which can be selected for the next operating step. These programs are define, first, next, other, modify and NC-file. All of this information appears on the screen of the video display unit 26, under control of the graphics control 22, which is in turn controlled by the IO computer 12. These displays, together with the display of the sheet whose dimensions have been entered, appears automatically on the entry of the two dimensions for the sheet.

The define program is next entered, by depressing the key associated with a first soft key designation "define". Subsequently, part numbers are entered into the system through the keyboard 25, one at a time, together with their X and Y dimensions, and each part number and its appropriate dimensions are illustrated on the display screen at locations 38-42 as they are entered. During entry, prompting messages appear on the display screen requesting the part number, the X dimension, and the Y dimension, as these designations are required. This

0105217

program is exited by depressing another key on the keyboard, which is preferably the space bar of the keyboard.

When the "define" program is executed, the display screen returns to its original display, in which one of the soft keys is identified as "first". When this program is entered, by depressing the "first" soft key, the screen of the video display unit 26 illustrates the designation and dimensions of the last part number which is entered, and four soft keys are identified as "OK", "corner", "part", and "rotate". When the "part" soft key is operated a new part number and X dimensions appear on the screen, which in this case is the first part number which was entered. For each successive operation of the "part" soft key, the next successive part number with its dimensions is indicated in locations 38-42 of the screen. The part number with the dimensions currently displayed on the screen is hereinafter referred to as "current part".

When the "corner" soft key is depressed, the blank dimensions of the current part is displayed in one of the four corners of the sheet. Successive depressions of the "corner" soft key moves the particular corner around the sheet in a clockwise direction, except that the lower left-hand corner of the sheet is a prohibited location, because of the clamps which hold the sheet during shearing. When the "rotate" soft key is depressed, the blank next illustrated will be rotated (by 90°) in the next legal corner (in a clockwise direction) of the sheet. When the soft key designated "OK" is depressed, the position of the blank currently illustrated on the screen is taken as part of the final arrangement of blanks, and the soft keys return to their original display, which includes the designation of the "next" soft key. This display is modified from its original form, since one blank has now been positioned on the sheet, so that there is now a greater percentage indicated for the percentage of use with a lesser percentage indicated for scrap.

When the next soft key is depressed, all of the soft keys are redesignated to the condition illustrated in Fig. 15, and one of the part numbers is displayed, together with its dimensions. Successive depressions of the part soft key changes the part and its associated dimensions of the "rotate" soft key interchanges the X and Y dimensions, so that the blank is rotated 90°.

Then up, down, left and right soft keys designate the position of the current blank in relation to the reference blank, the reference blank being the last blank to be arranged on the sheet.

In a case in which the first blank is positioned at the upper left-hand corner of the sheet, depression of the "down" soft key will arrange the current blank directly below the reference blank. This part number is the same. This results in two identical blanks being positioned one above the other in the upper left-hand corner, as illustrated in Fig. 15 where these blanks are identified 31 and 32. Blank 32 becomes the new reference blank, and is so identified by the cursor 37 appearing within its border. If the "right" soft key is next depressed, the blank 33 will appear on the screen, after which the blank 34 will appear on the screen when the "up" soft key is depressed. Then when the part soft key is next depressed, a new part number is displayed, and subsequent depression of the "right" soft key positions this part to the right of the blank 34. In Fig. 15 the new part 35 is illustrated arranged to the right of part 34. Finally, another part is selected by further depression of the "part" soft key, and when the "right" soft key is again depressed, this new part is displayed at blank 36, to the right of the blank 35. The cursor 37 designates the blank 36 as the reference part, as illustrated in Fig. 15, since it is the last one to be arranged on the sheet.

When the "modify" soft key is operated, the cursor 37 may be moved left, right, up or down, using the soft keys which are so designated, so that the cursor 37 can select a different blank for use as the reference blank. For example, the cursor 37 is moved leftwardly to be within the borders of the blank 32, another blank can be arranged

0105217

directly below the blank 32 in a further operation.

Depression of the "etc" soft key two times returns the display to its original condition, in which the percentage of utilization and scrap are indicated, together with the original soft key names described above. The display of the sheet with the blanks thus far arranged continues to be displayed on the screen.

When the other soft key is depressed, three new soft keys are designated which are labelled "count", "hi-low", and "absolute". Three other soft keys, namely "part", "rotate" and "etc" continue to be displayed with the functions described above.

When the "count" soft key is depressed, the number of current parts which have thus far been arranged on the sheet are counted and this count is displayed. The designation of the current part can be changed by depression of the "part" soft key.

When the "hi-low" soft key is depressed, the high and low X and Y coordinates of the reference part (that blank which contains the cursor) are displayed on the screen. When the "absolute" soft key is depressed, the current part may be placed anywhere on the sheet by specifying the coordinates of the lower left-hand corner of the part, inserting these coordinates through the keyboard 25. Depression of the "etc" soft key returns the display to its original condition in which the utilization and waste is indicated, as well as the total arrangement on the sheet.

If it is desired to change the position of any of the previously arranged sheets, the modified program may be entered by depressing the soft key designated "modify". During the "modify" program, the designated soft keys are up, down, left, right, erase and etc. The first four soft keys permit positioning the cursor to select any desired reference blank, and then depressing the soft key designated "erase", erases the reference blank from the screen. Any lines which are in common between the

0105217

reference blank and previously arranged blanks are redrawn, so that only the reference blank is erased. Using the erase procedure, various blanks may be repositioned anywhere on the sheet, until the operator is satisifed with the arrangement. An objective indication of the efficiency of the arrangement is indicated in the display message which identifies the percent of utilization or scrap of the sheet.

When the operator is satisfied with the arrangement, depressing the soft key designated "NC-file", causes the IO computer 12 to generate a sequence of instructions for operating an automatic shears, for causing the shears to cut a sheet with the specified dimensions into the blanks as arranged on the display screen. These instructions are preferably arranged so that the shearing progresses from the upper right corner toward the lower left corner of the sheet. If parts can be cut acceptably in both the X axis or Y axis, the X axis is preferred.

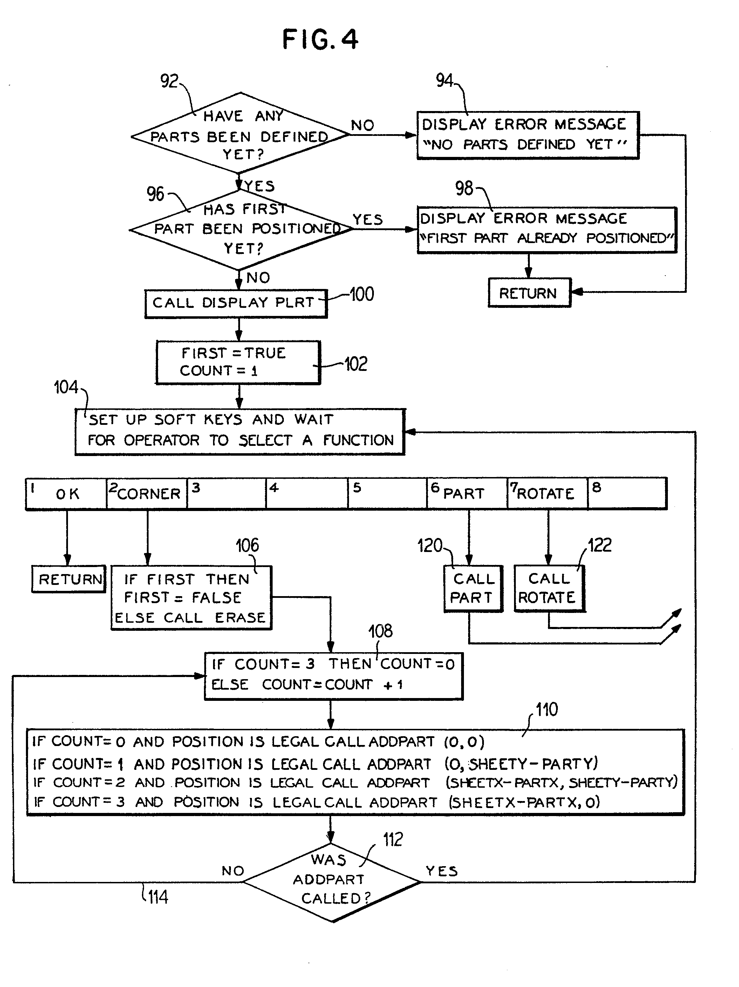

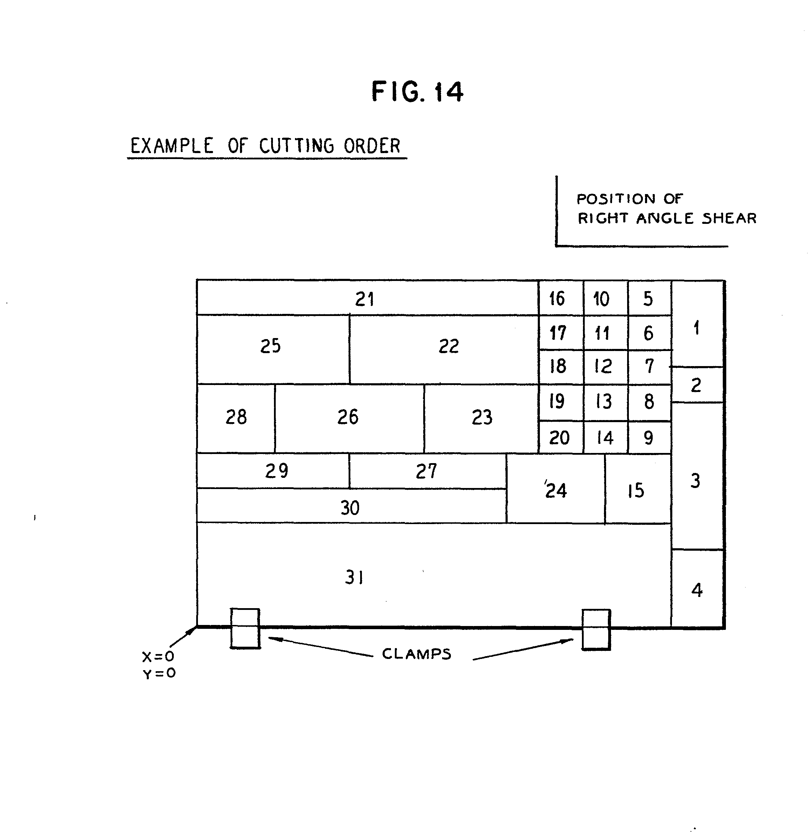

Fig. 14 illustrates an example of a sheet which has been programmed to cut 31 blanks, each of the blanks being numbered in the order in which they are cut from the sheet, using a right-angle shear. The relative position of the right-angle shear is indicated in Fig. 4 above the sheet. The sheet is held in position during shearing by clamps which engage its lower periphery. As shown in Fig. 14, both clamps engage a blank number 31, which is the last blank to be cut from the sheet. Any position of the right-angle shear which might interfere with one of the clamps is a prohibitive position, and blanks may not be arranged in such a way which would cause the right-angle shear to enter a prohibitive position.

From the above description of the operation, it will be seen that a variety of functions can be executed using principally the soft keys, and using the keyboard when other data such as numbers are to be entered for part numbers, dimensions and the like. The soft keys control the selection of the program sequences as well as controlling movement of the cursor for positioning new blanks on the sheet, rotating the blanks, and erasing displayed blanks where desired. Also, as indicated above, the soft keys can be used to count the number of blanks already arranged for a subject port, and to prepare a sequence of instructions for use by the automatic shearing machine.

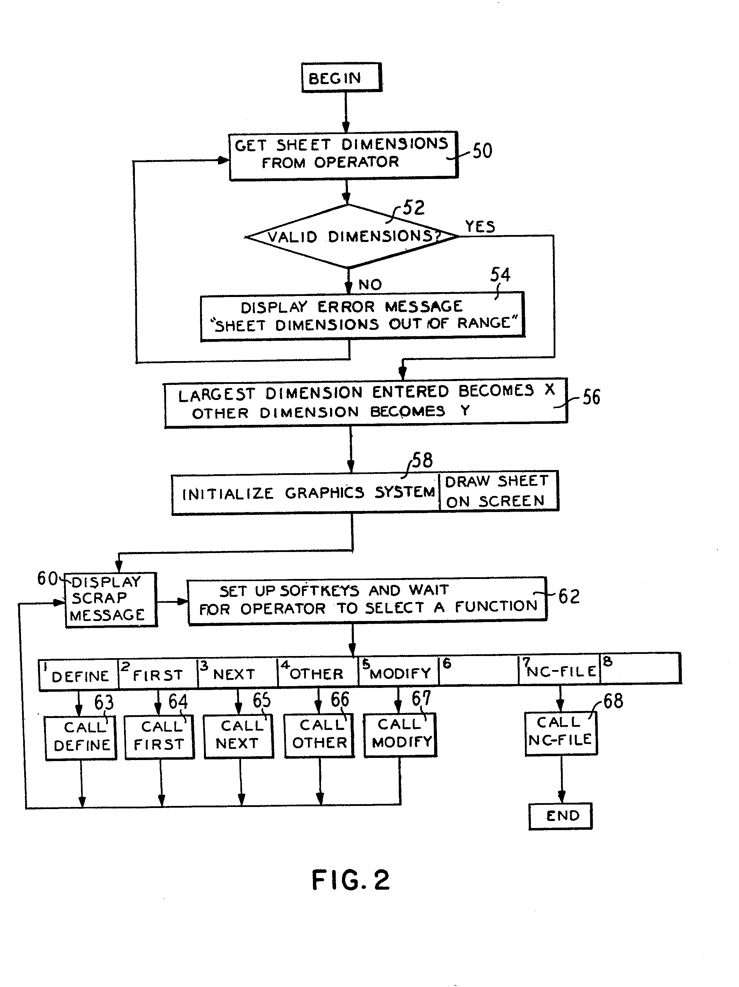

Reference will now be made to Figs. 2-13, which describe various procedures used during operation of the present invention. Figs. 2-13 are schematic illustrations in the form of flow charts, in which operation steps are indicated by rectangles, and decision units are indicated by diamonds.

In a preferred embodiment of the present invention, Figs. 2-13 represent sequences which are carried out by the CPU 14 within the IO computer 12. In this case, the CPU 14 is preferably an MPU such as Intel Model No. 8085, and the graphics controller 22 may be one of the units described in the Intel handbook entitled "The Peripheral Design Handbook". A complete listing of the programs used when the 8085 is employed has been placed in the application file of the case, and is incorporated herein by reference.

Alternatively, the apparatus of the present invention may be constructed in the nature of a special purpose computer, in which case each of the boxes illustrated in the Figs. 2-13 may be embodied in the form of a separate physical unit, such as a collection of logic gates energized under the appropriate conditions, a comparator, or the like. Apparatus for carrying out the various steps indicated on the Figs. 2-13 are well known to those skilled in the art, and therefore need not be described specifically herein.

Fig. 2 illustrates the main loop of operations. The main loop is entered whenever any other program is finished, and is the first program performed by the apparatus. At the beginning of the program, the unit 50 gets the sheet dimensions from the operator, which are entered through the keyboard 25, and displayed on the screen at positions 38-42 as described above. Unit 50 is preferably embodied in the form of instructions stored in ROM 18, when the CPU 14 is a general purpose computer, but alternatively may be embodied in the form of logic gates interconnected with the keyboard 25, control panel 24, and the other units interconnected by the bus 10. When the dimensions are entered, control passes to unit 52, which checks the dimensions against data stored in the ROM 18, to determine whether the dimensions are valid. If not, unit 54 displays an error message and returns control to unit 50. If the dimensions are valid, control passes to the unit 56 which stores the dimensions in the RAM 20 in the spaces assigned therein for the X and Y dimensions. The X dimension is the larger one of the two dimensions entered by the operator. Control then passes to the unit 58, which initializes the graphics systems in order to draw the sheet on the screen. Then control passes to the unit 60, which calculates the area of the sheet displayed, calculates the total area of the blanks which have been arranged, and displays the percent utilization and/or scrap based on the current arrangement. Initially, of course, the scrap figure displayed is 100%. Then control passes to unit 62 which sets up the soft keys as illustrated in Fig. 2 by displaying their legends on the screen directly above the keys 28. Depending on which key is pressed, one of the units 63-68 receives control, after which, when the program ends, the unit 68 is selected, or control is returned to unit 60 which calculates a scrap message and control to unit 62.

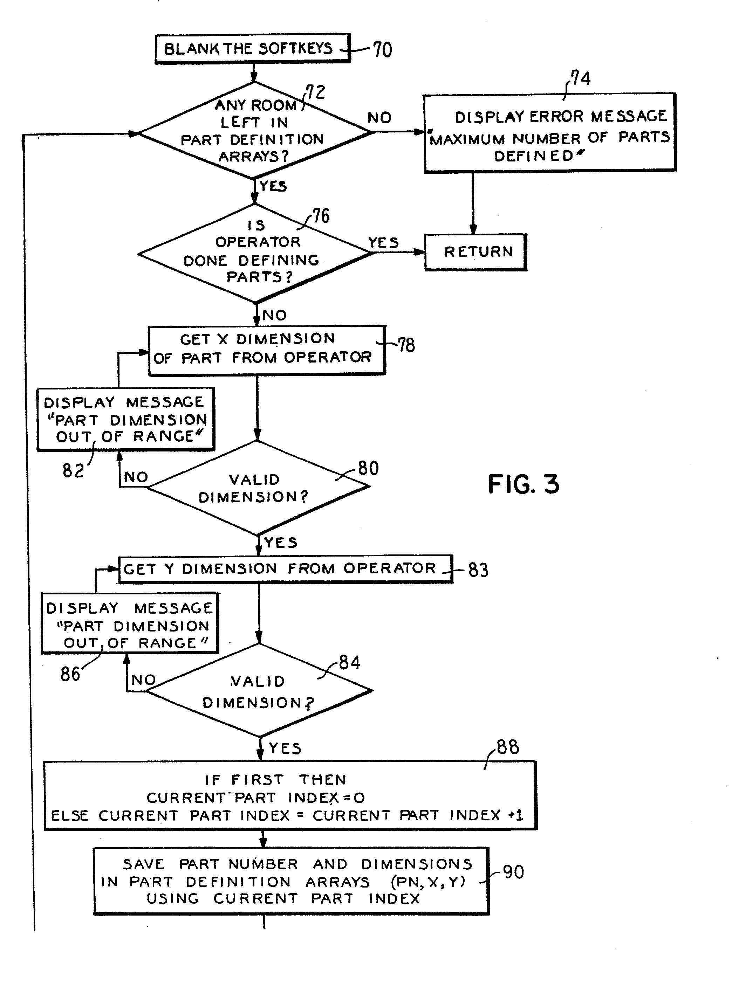

Unit 63 calls the "define" program, which is illustrated in Fig. 3. When this program is entered, the soft keys are blanked by the unit 70, and control is passed to decision unit 72. This unit checks to see whether there is available space in the designated part of the RAM 20 for a listing of part numbers with their appropriate sizes. If no space remains, control passes to the unit 74

0105217

which displays an error message and returns control to the main program at the unit 60. If space remains in the appropriate section of the RAM 20, control passes to the unit 76 to determine whether part definition is complete, and if so control returns to the unit 60. If not, unit 78 receives the X dimension from the operator who enters it into the keyboard 25, and then unit 80 determines whether it is a valid dimension. If not, unit 82 displays an error message and returns control to unit 78. If the dimension is valid, control passes to unit 83 in order to receive the Y dimension, and this is checked for validity in unit 84, with an error message displayed by unit 86 if the dimension is invalid. When both dimensions are valid, control passes to unit 88 which sets the part number index equal to zero if it is the first part defined, otherwise the part number index is incremented and control passes to the unit 90. Unit 90 stores in an appropriate portion of the RAM 20 the part number with its dimensions and returns control to unit 72.

When all of the parts have been defined, the operator presses the space bar or another control, which is recognized by unit 76, and returns control to the main loop of unit 60.

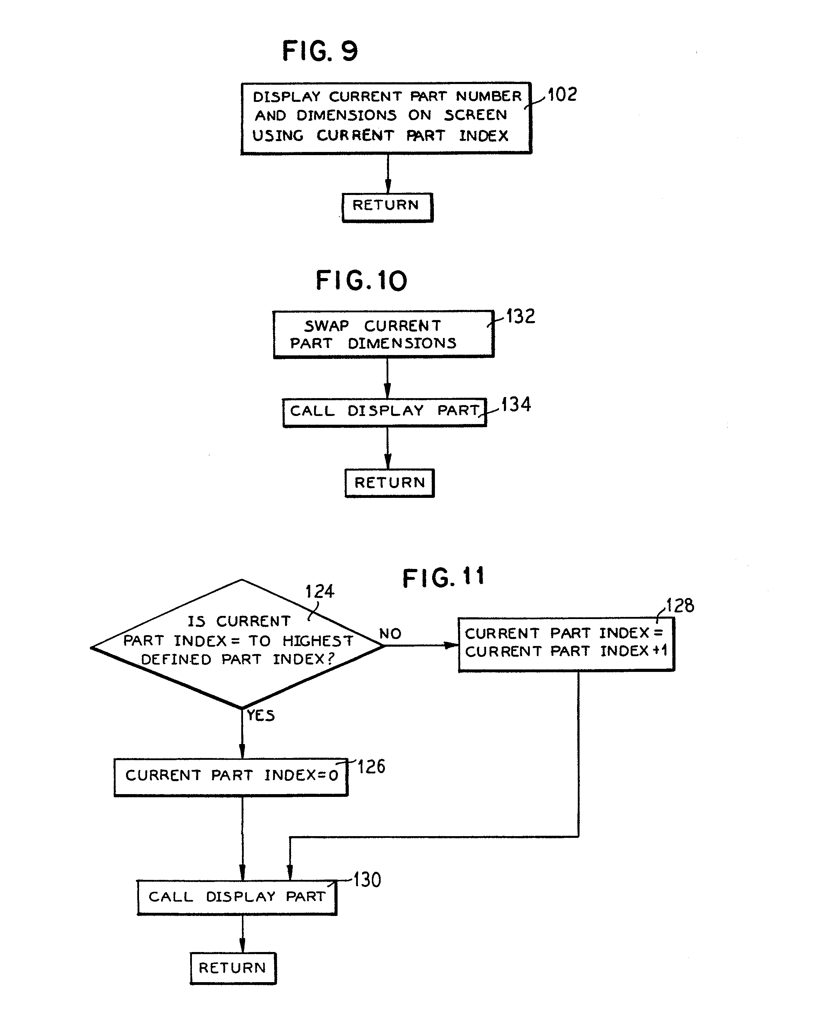

When unit 64 is selected in the main loop, the "first" program is called which is illustrated in Fig. 4. When this program is entered, a decision unit 92 receives control which determines whether any parts have been defined. If not, unit 94 displays an error message and returns control to the main loop at unit 60. Otherwise, unit 96 receives control which determines whether a first part has been positioned. If the first part has already been positioned, unit 98 displays an error message and returns control to the main loop. Otherwise, unit 100 calls the display part program which is illustrated in Fig. 9. This program passes control to the unit 106, which withdraws the current part number and dimensions from the place where they are stored in the RAM 20, and displays them on the video display screen 26, by means of the graphics controller 22. Then control is returned to the first program at unit 102. This unit sets a flag identified as "first" and sends a counter equal to 1. Then unit 104 sets up the soft keys in the manner indicated and waits for one of them to be selected.

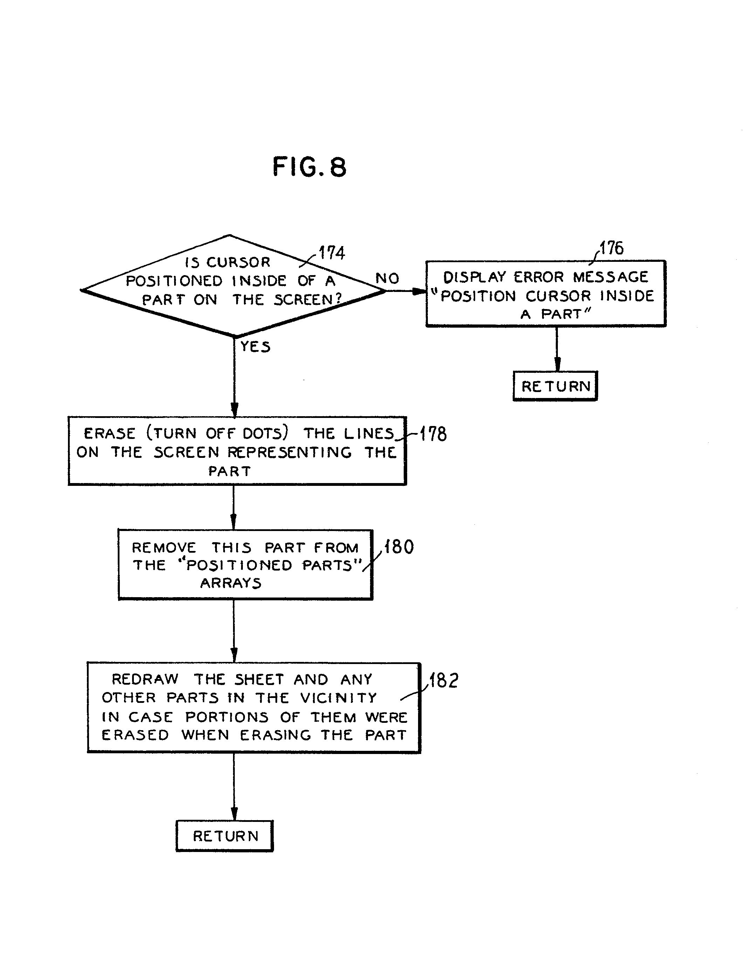

When the OK key is selected, control returns to the main loop. When the corner key is selected, control passes to unit 106 which inspects the first flag. If the first flag is set, it is reset and control passes to unit 108. If the first flag is not set, the erase program is called (llustrated in Fig. 8) after which control is returned to unit 108. The effect of the erase program within the first procedure is to erase the blank displayed in one of the corners if a different corner is selected.

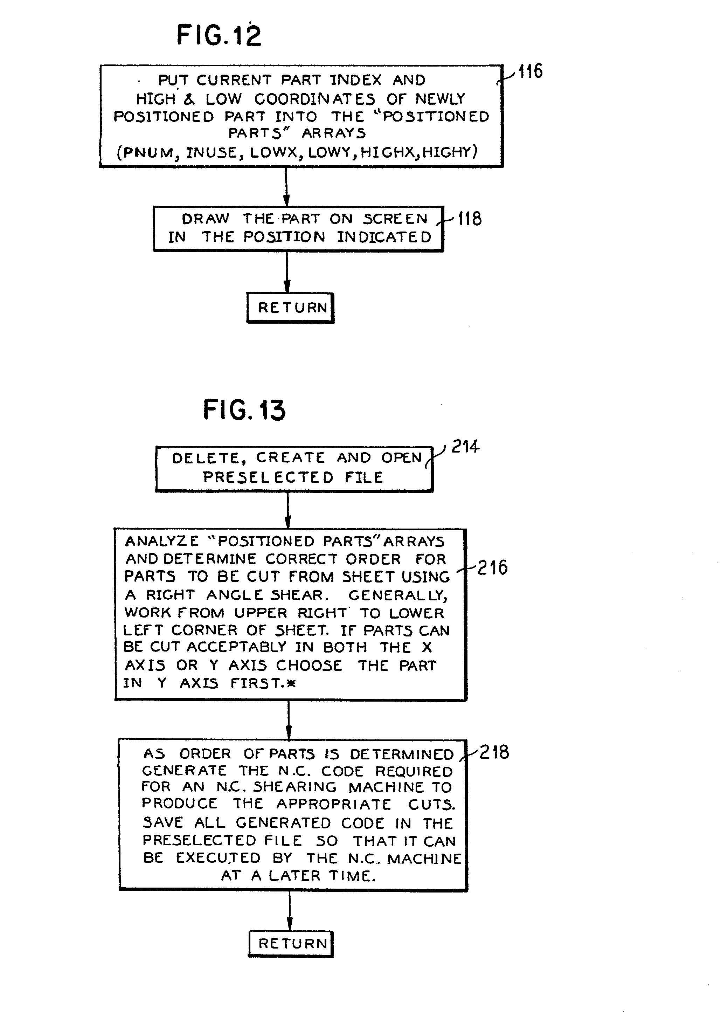

The unit 108 increments the count initially set by the unit 102, and passes control to a unit 110. The unit 110 determines whether the position of the part is legal. A position at the lower left corner of the sheet is usually illegal, because of the interrelationship between the clamps holding the work, and the position of the right-angle shear. Other corners may also be illegal, depending on the size and shape of the current part. If the position is illegal, a unit 112 returns control of the line 114 to the unit 108, to increment the count and then return control to unit 110 until a corner is found in which the position is legal. At that time, the unit 110 calls the add part program (shown in Fig. 12) specifying the position of the lower left-hand corner of the blank to be arranged. In the lower left-hand corner of the sheet, the lower left-hand corner of the blank is designated at 0,0. In the upper left corner, the lower left-hand corner of the blank has a zero X dimension, and a Y dimension equal to the Y dimension of the sheet minus the Y dimension of the part. Similar calculations are employed in order to determine the lower left-hand corner of the blank position of the other corners of the other sheet.

Unit 116 receives control when the add part program (Fig. 12) is entered. The RAM 20 stores an indication that the current part is being arranged relative to the sheet and also stores the high and low coordinates with the X and Y dimensions, which give the locations of the four points of the arranged blank. In addition, the part number is stored and a number is stored designating the area of the arranged part. This makes it possible, during a count procedure, to survey the contents of the RAM 20, counting the number of times the designated part number is stored. It also makes it possible to calculate the scrap message by totaling the figures stored for the areas of all of the arranged parts. When the data is stored by the unit 116, unit 118 receives control which causes the graphics controller 22 to draw the arranged part on the screen in the correct position. Then control returns to unit 112, which passes control to the unit 104.

When the part soft key is operated, unit 120 calls the part program (shown in Fig. 11), and when the rotate key is operated, unit 122 calls the rotate program (shown in Fig. 10).

When the part program receives control, 124 determines whether the current part number index is equal to the highest part number index which has been defined. If so, unit 126 resets the part number index to 0. Otherwise, unit 128 increments the part number index by 1, after which unit 130 calls the part program (Fig. 9), and returns control to unit 104.

When the rotate program (Fig. 10) is called, unit 132 swaps the X and Y dimensions of the current part, and then unit 134 calls the display part program (Fig. 9), returning control to unit 104.

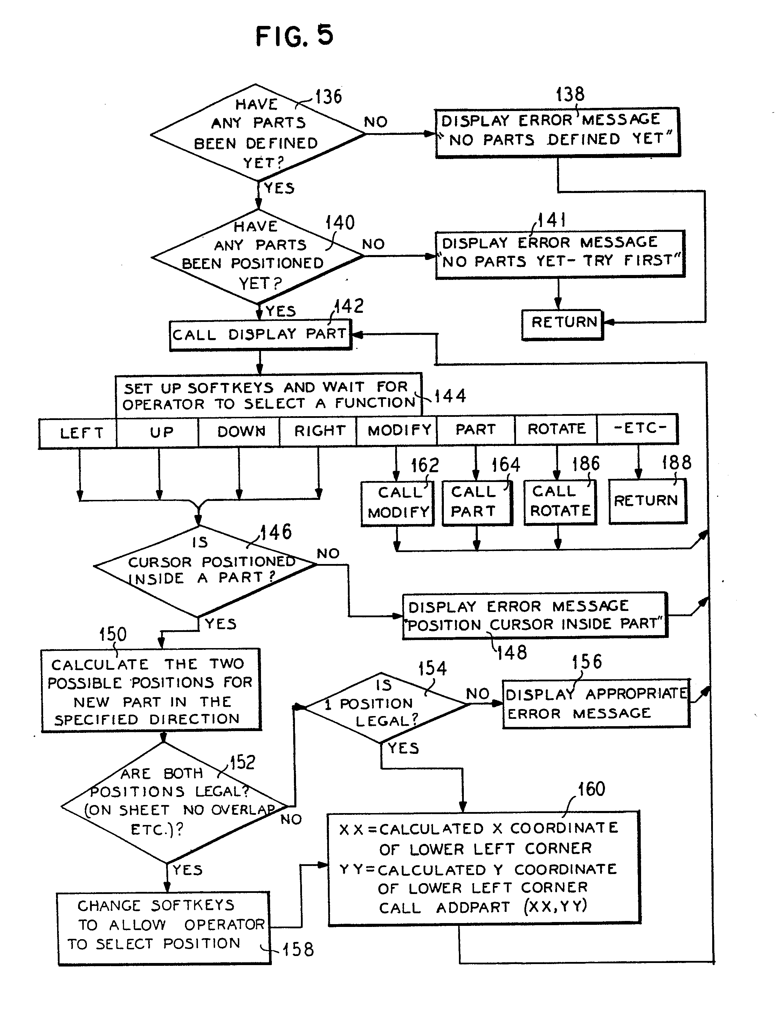

The next program is illustrated in Fig. 5. When it receives control (from the main loop program illustrated in Fig. 2), unit 136 determines whether any parts have been defined, and if not, unit 138 displays an error mes-

0105217

sage. Otherwise, unit 140 determines whether any parts have been positioned, and if not unit 141 displays a different error message. In either event, control is returned to unit 60 of the main loop. Otherwise, control passes to unit 142 which calls the display part program and then unit 144 sets up the soft keys in the manner illustrated in Fig. 5.

When any of the four position keys are selected, a unit 146 determines whether the cursor is inside a part, and if not unit 148 displays an error message and returns control to unit 142. Otherwise, unit 150 calculates two possible positions for the new part in the specified direction, viz, whether the top or bottom of the blank is to line up with the reference blank when the selected position is either right or left. Similarly, when the specified direction is up or down, the two possible positions are with the right or left-hand edge of the current blank lining up with the corresponding edge of the reference blank. The unit 152 determines whether both positions are legal, and if not unit 154 determines whether either of the positions is legal. If not, unit 156 displays an error message and returns control to unit 142. If both the positions are legal, unit 158 changes the designation of the soft keys on the screen to allow the operator to select the appropriate position. If the selection is between top and bottom edges, two soft keys are re-labelled "top" and "bottom". If the selection is left and right, the "left" and "right" soft keys of the display remain, with the others blanked out. Then when the operator makes the selection as to the desired position, control passes to unit 160. If only one position is legal, unit 160 receives control directly from unit 154.

Unit 160 calculates the X-Y coordinates of the lower left-hand corner of the part, and calls the "add part" program (Fig. 12) to store the appropriate part identifiers in the RAM 20 and to display the part on the screen in the position selected by means of the four position selection soft keys. Then control returns to the unit 142.

-17-

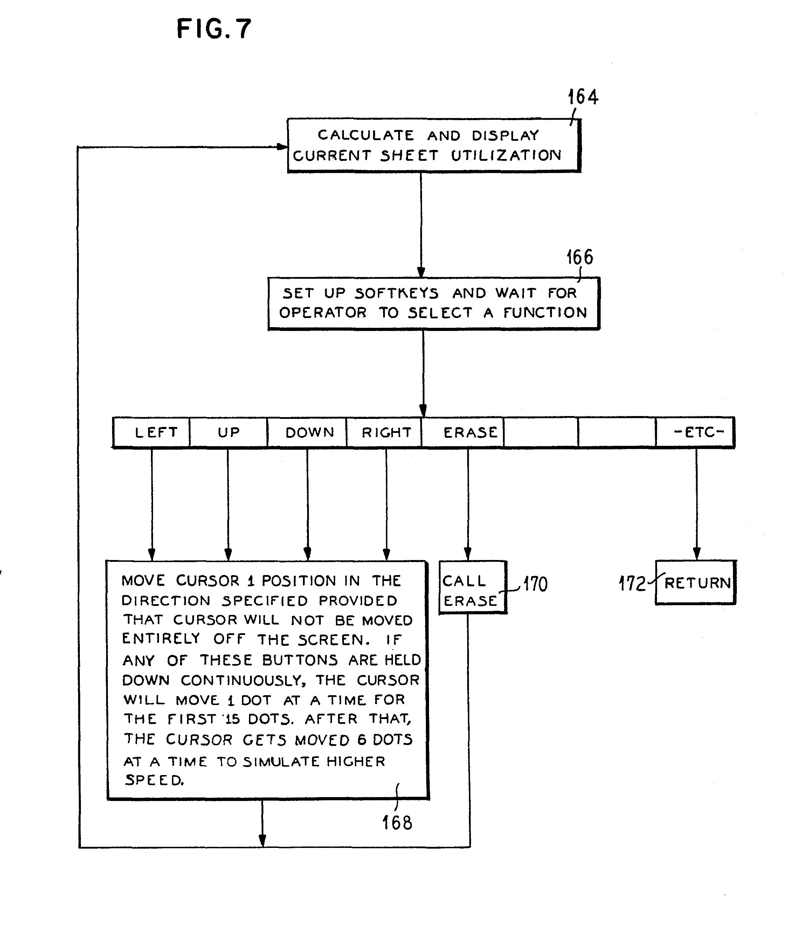

When the "modify" soft key is operated, unit 162 calls the "modify" program, shown in Fig. 7.

Unit 164 receives control as the first step of the "modify" program, which calculates and displays the current sheet utilization. This is done by adding the combined areas of all of the arranged blanks, and dividing it by the total area of the sheet. This is multiplied by 100 to give the percentage of utilization, and this figure is subtracted from 100 to supply the percentage of scrap. These figures are then displayed on the display screen under control of the graphic controller 22. Unit 166 then receives control, which sets up the soft keys in the manner illustrated in Fig. 7. When one of the four position soft keys are selected, unit 168 receives control, which moves the cursor in the selected position. Cursor movement is initially slow, but after a time, it is moved at a higher speed in order to shorten the time for long cursor movements. Releasing and then redepressing one of the soft keys restores the speed of cursor movement to slow. When the cursor has been moved to the correct position, control is returned to the unit 164.

When the "erase" soft key is operated, unit 170 calls the "erase" program, after which control returns to unit 164. When the "etc" key is operated, unit 172 returns control to the "next" program at unit 142.

The "erase" program receives control at decision unit 174, which determines whether the cursor unit is positioned inside an arranged part. If not, unit 176 displays an error message and returns control to unit 164 (Fig. 7). Otherwise, unit 178 erases the part within which the cursor is located, and unit 180 removes the appropriate designations relating ot this part from storage in the RAM 20. Then unit 182 redraws the sheet if necessary and any other parts in the vicinity of the deleted or erased parts, which may have been erased because of having lines in common with the erased part. Then control is returned to the "modify" program at unit 164.

Returning to Fig. 5, when the "part" soft key is selected, unit 184 calls the "part" program (Fig. 11) which has already been described, after which control returns to unit 142. When the "rotate" soft key is selected, unit 186 calls the "rotate" program (Fig. 10) which has been described above, after which controls return to unit 142. When the "etc" soft key is energized, unit 188 returns control to the main loop.

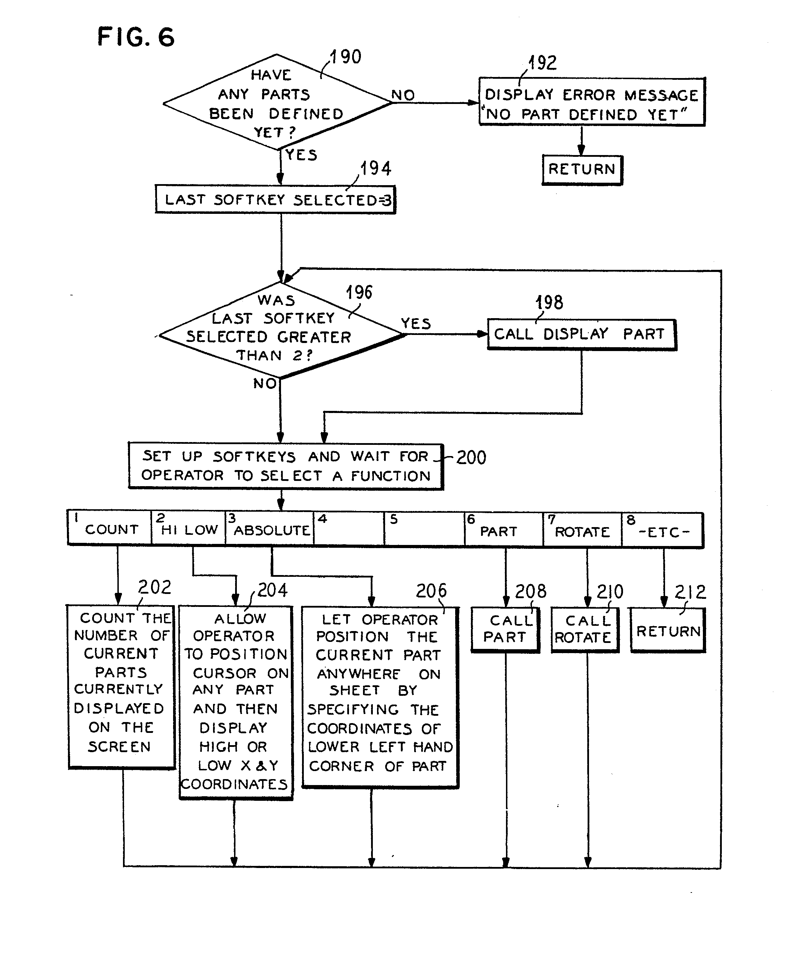

The other program may be selected by a soft key displayed in the main loop. It is illustrated in Fig. 6. Its first unit is unit 190 which determines whether any parts have been defined, and if not, unit 192 displays an error message and returns control to the main loop. Otherwise, unit 194 sets a flag equal to 3, such flag being labelled by a soft key selected, and passes control to unit 196. Unit 196 examines the state of the flag which has just been set, and if it is greater than 2, passes control to 198 which calls the display part program described above in connection with Fig. 9. Then control passes to unit 200, which sets up the soft keys in the manner illustrated in Fig. 6. In this condition, when the count soft key is operated, the number of current parts currently displayed on the screen is counted, by reference to data stored in the RAM 20, and the total is displayed on the screen, after which control is returned to unit 196. Unit 202 also sets the last soft key selected flag equals 1, so that unit 196 passes the control subsequently directly to the unit 200, bypassing unit 198.

When the "hi-low" soft key is selected, the operator may position the cursor at any part, and then either the high and low X and Y coordinates as selected by operator are displayed on the screen for that selected part.

The unit 204 changes the soft key display to relabel four soft keys "left", "up", "down" and "right" so that the cursor can be positioned. Then the high and low coordinates for X and Y are moved to select one of the arranged parts, so that its X and Y coordinates can be displayed.

When the absolute soft key is selected, unit 206 receives control, which allows the operator to enter that position in terms of X-Y coordinates through the keyboard 25 after which the "add part" program (Fig. 12) is called, and the control is then returned to unit 196.

When the part soft key or "rotate" soft key are selected, control is passed to units 208 and 210, respectively, which call the part program (Fig. 11) or the rotate program (Fig. 10), and return control to the unit 196. The "etc" soft key returns control to the main loop by way of unit 212.

When the NC-file soft key is selected in the main loop, unit 68 calls the NC-file program (Fig. 13). Unit 214 receives control initially, which opens a file in the RAM 20 and passes control to unit 216. The unit 216 assembles a series of instructions for operating an automatic right-angle shear, which position the shear and then cause the shear to operate by moving downwardly through the sheet and then returning to up position above the sheet. Successive movements of the shear proceed from the upper right-hand corner toward the lower left-hand corner, with movements in the Y direction taking preference. Control is then passed to unit 218 which generates the NC code required for the automatic machine.

.The analysis of the arranged parts is determined by inspecting the high and low X and Y dimensions which were stored by means of unit 116. Since the zero point for these dimensions is the lower left-hand corner of the sheet, the part with the highest X and Y dimensions is the next blank to be cut. Thus, in the arrangement shown in Fig. 14, blank number 1 is the first blank to be cut from the sheet. Blank number 2 is identified as being the second blank to be cut, because its maximum X dimension is higher than any other blank except for blanks 3 and 4, and its Y dimensions are higher than those of both blanks 3 and 4. After blank 4 is selected, blank 5 is next to be selected, because it has the highest X-Y dimensions of any remaining blank.

0105217

After blank 9 is selected, blank 10 is next selected, even though blank 15 has a higher maximum X dimension, since the maximum X dimension of blank 10 exceeds the minimum X dimension of blank 15. By means of the same process of analysis, blanks 16 through 23 are all selected prior to blank 24.

The specific NC instructions required to operate a particular automatic shearing machine depend on the specific machine involved, but the means for generating such instructions will be apparent to those skilled in the art, given a determination of the order of selection as indicated in Fig. 14.

It will be apparent that a variety of various integrated circuits may be selected to serve as the hardware components of the system as illustrated in Fig. 1. For example, the CPU 14 may comprise a Model 8085 commercially available from Intel, and the graphics controller 22 may incorporate a CRT controller, such as Model No. SMC 5027, available from SMC, or Model No. TI 9927, available from Texas Instruments.

It will be apparent that various modifications and additions may be made by those skilled in the art, without departing from the essential features and novelty of the present invention which are intended to be defined and secured by the appended claims.

0105217

CLAIMS

1. A control system for a blanking center comprising a video display unit, memory means, a controller connected to said display unit and to said memory means for displaying a non-overlapping arranged series of rectangles corresponding to data stored in said memory means, a keyboard connected to said memory means for entering said data therein, and sequence control means connected with said memory means, said controller and keyboard for selectively causing said controller to display a series of indicia associated with certain keys of said keyboard in accordance with previous predetermined sequences of operation of said certain keys, and for effecting subsequent operations in response to operation of one of said selected keys in accordance with the displayed indicia associated with said key.

2. Apparatus according to claim 1, wherein one of said displayed indicia corresponds to a function in which the dimensions of a plurality of rectangular blanks are identified by data entered by use of said keyboard, including means for storing a data array in said memory means corresponding to said dimensions, and means for displaying such data on said video display.

3. Apparatus according to claim 2, including means for comparing said sizes with previously stored data and means responsive thereto for selectively displaying an indication that one of said dimensions is beyond the range of dimensions of blanks which can be arranged in a sheet of a predetermined size.

4. Apparatus according to claim 1, wherein one of said displayed indicia corresponds to a function in which a second rectangle is positioned in one of the corners of a first rectangular sheet displayed on said video display, and including means operative in response to operation of the key associated with said one indicia for displaying a smaller one of said rectangles positioned in the corner of a larger one of said rectangles.

5. Apparatus according to claim 4, including means for responding to operation of one of said certain keys after said smaller rectangle is displayed, for selectively displaying said smaller rectangle positioned in a different corner of said larger rectangle.

6. Apparatus according to claim 4, for selectively inhibiting the display of said smaller rectangle in any of the corners of said larger rectangle.

7. Apparatus according to claim 4 for selectively displaying said smaller rectangle in said corner in a rotated attitude.

8. Apparatus according to claim 1, wherein one of said displayed indicia corresponds to a function in which a second rectangle is positioned adjacent to a first rectangle on said video display, and including means responsive to operation of the key associated with said one indicia for causing said controller to display a plurality of indicia in association with said certain keys corresponding to different positions adjacent said first rectangle, and means responsive to one of said certain keys after said position-corresponding indicia are displayed to cause said controller to display said second rectangle in a position selected by said one key.

9. Apparatus according to claim 8, including means responsive to operation of a different one of said certain keys for displaying said second rectangle in a rotated attitude relative to said first rectangle.

10. Apparatus according to claim 8, including means for comparing the dimensions of said second rectangle with previously stored data, and for displaying an indication in response to such comparison that there is more than one arrangement of said second rectangle at the selected position relative to said first rectangle.

11. Apparatus according to claim 8, wherein said video display includes a cursor, and including means for moving cursor on said display to designate a rectangle as said first rectangle.

0105217

12. Apparatus according to claim 1, wherein one of said displayed indicia corresponds to a function in which a second rectangle is displayed with outline of a first rectangular sheet displayed on said video display, and including means responsive to operation of said keyboard for selecting the position of a predetermined corner of said second rectangle on said display.

13. Apparatus according to claim 12, including means for selectively displaying said second rectangle in a rotated attitude relative to said first rectangle.

14. Apparatus according to claim 1, wherein one of said displayed indicia corresponds to an erasing function, and including means operative in response to operation of the key associated with said one indicia for erasing a designated one of said rectangles from said video display.

15. Apparatus according to claim 14, wherein said video display includes a cursor, and including means for selectively moving said cursor within the outline of one of said rectangles to designate the rectangle to be erased.

16. Apparatus according to claim 1, wherein one of said displayed indicia corresponds to a function in which a list of instructions is generated for controlling an automatic shearing machine, and including means responsive to operation if the key associated with said one indicia for selecting an order of said rectangles as a result of comparison of the dimensions of said rectangles stored in said memory means, and generating said instructions to shear blanks from a sheet in the order selected.

17. A control system for a blanking center comprising a video display for displaying a representation of a sheet and a plurality of rectangular blanks to be cut from said sheet in a predetermined arrangement in relation thereto, memory means, a controller for controlling said video display to display said rectangles in accordance with data stored in said memory means and in response to said keyboard, sequence control means connected to said keyboard and to said controller for controlling the order of display of said rectangles on said video display, and including means responsive to operation of certain keys of said keyboard for displaying said rectangles in an arrangement determined by the sequence of operation of certain keys of said keyboard.

18. Apparatus according to claim 17, wherein said sequence control means causes said controller to display said rectangles in an arrangement in which rectangles are added one at a time to said arrangement, with means connected to and responsive to operation of said keyboard for determining the position and attitude in which each successive rectangle is displayed.

19. A method for controlling operation of a blanking center comprising the steps of:

providing a video display unit, a memory device, a controller for controlling operation of said video display to display selected information stored in said memory device, and a keyboard for entering information into said memory device,

displaying indicia corresponding to different functions necessary to select an arrangement of blanks to be cut from a sheet on said blanking center,

said indicia being associated with selected keys of said keyboard,

operating said selected keys in accordance with a selected function indicated for said keys or said video display,

operating said keyboard to enter information into said memory device corresponding to dimensions of said blanks,

operating said keyboard to select the arrangement in which said blanks are to be cut from said sheet,

and displaying the relative arrangement of said blanks and said sheet on said video display as the arrangement is selected by said keyboard.

20. The method according to claim 19, including the steps of displaying said indicia in close proximity to said associated keys, and selectively changing the indicia displayed in proximity to said keys.

21. The method according to claim 19, including the steps of:

entering the dimensions of said sheet and said blanks into said memory device with said keyboard,

and displaying said sheet and blanks on said video display unit in accordance with said dimensions.

22. The method according to claim 21, including the steps of comparing said dimensions with previously stored data,

and selectively displaying a message on said video display unit in response to said comparison.

23. The method according to claim 19, including the steps of displaying one of said blanks in a selected relation to said sheet, and selectively rotating the attitude of said blanks relative to said sheet.

24. The method according to claim 19, including the steps of displaying said blanks in an arrangement, and adding additional rectangles to said displayed arrangement one by one, in response to operation of said keyboard.

25. The method according to claim 24, including the steps of selectively erasing a selected blank from said display.

26. The method according to claim 19, including the step of generating a sequence of instructions for operating an automatic shears to cut blanks from a sheet in the displayed arrangement, beginning with blanks located at one corner of said sheet and proceeding toward said opposite corner.

**FIG. 1**

I/O COMPUTER — 12
CPU — 14
BUFFER — 16
BUS — 10
ROM — 18
RAM — 20
GRAPHICS CONTROLLER — 22
CONTROL PANEL — 24
KEYBOARD — 25
VIDEO DISPLAY — 26

**FIG. 15**

31   34
35
37
36
32   33

38   30   40   42
26

PN/3   X = 022.100   Y = 031.750

| UP | DOWN | LEFT | RIGHT | MODIFY | PART | ROTATE | ETC- |

28

**FIG. 2**

```
┌─────────────────────────┐
│  BLANK THE SOFTKEYS  ├── 70
└─────────────────────────┘
            │
            ▼
       ╱ ANY ROOM ╲  72
      ╱  LEFT IN   ╲  NO        ┌──────────────────────────────┐
     ╱ PART DEFINITION ╲────────▶│  DISPLAY ERROR MESSAGE       │ 74
      ╲   ARRAYS?   ╱            │ "MAXIMUM NUMBER OF PARTS     │
       ╲          ╱             │      DEFINED"                │
            │ YES              └──────────────────────────────┘
            ▼                              │
         ╱  IS  ╲  76                      ▼
        ╱ OPERATOR ╲  YES        ┌──────────────┐
       ╱ DONE DEFINING ╲─────────▶│   RETURN     │
        ╲   PARTS?  ╱            └──────────────┘
         ╲        ╱
            │ NO
            ▼
   ┌──────────────────────────┐
   │  GET X DIMENSION         ├── 78
   │ OF PART FROM OPERATOR    │
   └──────────────────────────┘
            │
┌──────────────────┐
│ DISPLAY MESSAGE  │
│ "PART DIMENSION  │
│ OUT OF RANGE"    │
└──────────────────┘ 82
      ▲   NO      ╱  VALID  ╲  80
      └───────────  DIMENSION?
                   ╲        ╱
                      │ YES
                      ▼
   ┌──────────────────────────────────┐
   │ GET Y DIMENSION FROM OPERATOR ├── 83
   └──────────────────────────────────┘
            │
┌──────────────────┐
│ DISPLAY MESSAGE  │
│ "PART DIMENSION  │
│ OUT OF RANGE"    │
└──────────────────┘ 86
      ▲   NO      ╱  VALID  ╲  84
      └───────────  DIMENSION?
                   ╲        ╱
                      │ YES
                      ▼
   ┌──────────────────────────────────────────────┐
   │           IF FIRST THEN                       │ 88
   │      CURRENT PART INDEX = 0                    │
   │ ELSE CURRENT PART INDEX = CURRENT PART INDEX +1│
   └──────────────────────────────────────────────┘
                      │
                      ▼
   ┌──────────────────────────────────────────────┐
   │ SAVE PART NUMBER AND DIMENSIONS               │
   │ IN PART DEFINITION ARRAYS  (PN, X, Y)      ├── 90
   │     USING CURRENT PART INDEX                  │
   └──────────────────────────────────────────────┘
```

FIG. 3

# FIG. 4

92 — HAVE ANY PARTS BEEN DEFINED YET? — NO → 94 — DISPLAY ERROR MESSAGE "NO PARTS DEFINED YET"

YES ↓

96 — HAS FIRST PART BEEN POSITIONED YET? — YES → 98 — DISPLAY ERROR MESSAGE "FIRST PART ALREADY POSITIONED"

NO ↓ → RETURN

100 — CALL DISPLAY PLRT

102 — FIRST = TRUE  COUNT = 1

104 — SET UP SOFT KEYS AND WAIT FOR OPERATOR TO SELECT A FUNCTION

| ¹  O K | ²CORNER | ³ | ⁴ | ⁵ | ⁶PART | ⁷ROTATE | ⁸ |
|--------|---------|---|---|---|-------|---------|---|

RETURN

IF FIRST THEN FIRST = FALSE ELSE CALL ERASE — 106

120 — CALL PART

122 — CALL ROTATE

108 — IF COUNT = 3 THEN COUNT = 0 ELSE COUNT = COUNT + 1

110 —
IF COUNT = 0 AND POSITION IS LEGAL CALL ADDPART (0,0)
IF COUNT = 1 AND POSITION IS LEGAL CALL ADDPART (0, SHEETY − PARTY)
IF COUNT = 2 AND POSITION IS LEGAL CALL ADDPART (SHEETX − PARTX, SHEETY − PARTY)
IF COUNT = 3 AND POSITION IS LEGAL CALL ADDPART (SHEETX − PARTX, 0)

112 — NO ← WAS ADDPART CALLED? → YES

114

# FIG. 5

```
        ┌─136                              ┌─138
     ╱  HAVE   ╲         NO    ┌──────────────────────────┐
    ╱ ANY PARTS ╲──────────────│ DISPLAY ERROR MESSAGE    │
    ╲ BEEN DEFINED╱            │ "NO PARTS DEFINED YET"   │
     ╲  YET?  ╱                └──────────────────────────┘
        │ YES
        ▼
        ┌─140                              ┌─141
     ╱  HAVE   ╲         NO    ┌──────────────────────────┐
    ╱ ANY PARTS ╲──────────────│ DISPLAY ERROR MESSAGE    │
    ╲BEEN POSITIONED╱          │ "NO PARTS YET- TRY FIRST"│
     ╲  YET?  ╱                └──────────────────────────┘
        │ YES   ┌─142                       │
        ▼       │                           ▼
   ┌─────────────────────┐            ┌──────────┐
   │ CALL DISPLAY PART   │◄───────────│  RETURN  │
   └─────────────────────┘            └──────────┘
        │
        ▼
   ┌──────────────────────────────────┐
   │ SET UP SOFTKEYS AND WAIT FOR     │─144
   │ OPERATOR TO SELECT A FUNCTION    │
   └──────────────────────────────────┘
   │ LEFT │ UP │ DOWN │ RIGHT │ MODIFY │ PART │ ROTATE │ -ETC- │
                                  │162    │164    │186      │188
                               ┌──────┐┌──────┐┌──────┐┌──────┐
                               │ CALL ││ CALL ││ CALL ││RETURN│
                               │MODIFY││ PART ││ROTATE││      │
                               └──────┘└──────┘└──────┘└──────┘
            ┌─146
         ╱  IS  ╲            NO    ┌──────────────────────────┐
        ╱ CURSOR POSITIONED╲───────│ DISPLAY ERROR MESSAGE    │
        ╲ INSIDE A PART?  ╱        │"POSITION CURSOR INSIDE PART"│
         ╲            ╱            └──────────────────────────┘
            │ YES                        148
  150 ┌────────────────────┐
     ▼                                  ┌─154        156
   ┌──────────────────────┐          ╱  IS  ╲    NO  ┌──────────────────┐
   │ CALCULATE THE TWO    │         ╱1 POSITION╲──────│DISPLAY APPROPRIATE│
   │ POSSIBLE POSITIONS FOR│        ╲  LEGAL? ╱       │ ERROR MESSAGE    │
   │ NEW PART IN THE      │          ╲      ╱         └──────────────────┘
   │ SPECIFIED DIRECTION  │            │ YES
   └──────────────────────┘            │
        │            ┌─152             │
        ▼                              │                   160
     ╱ ARE BOTH ╲                      ▼        ┌───────────────────────────┐
    ╱ POSITIONS LEGAL? ╲               │        │ XX=CALCULATED X COORDINATE│
    ╲(ON SHEET NO OVERLAP╲─────────────┘        │    OF LOWER LEFT CORNER    │
     ╲   ETC.)?  ╱   NO                         │ YY=CALCULATED Y COORDINATE│
        │ YES                                   │    OF LOWER LEFT CORNER    │
        ▼                                       │    CALL ADDPART (XX,YY)    │
   ┌──────────────────────┐                     └───────────────────────────┘
   │ CHANGE SOFTKEYS      │
   │ TO ALLOW  OPERATOR   │
   │ TO SELECT POSITION   │─158
   └──────────────────────┘
```

# FIG. 6

```
                    190
         ┌─────────────────┐
         │      HAVE        │     NO      ┌──────────────────────────┐  192
         │  ANY PARTS       │────────────▶│  DISPLAY ERROR MESSAGE    │
         │  BEEN DEFINED    │             │ "NO PART DEFINED YET"     │
         │     YET?         │             └──────────────────────────┘
         └─────────────────┘                        │
              │ YES                          ┌──────────┐
                                             │  RETURN  │
              194                            └──────────┘
    ┌──────────────────────────┐
    │ LAST SOFTKEY SELECTED=3   │
    └──────────────────────────┘
              │
                        196
         ┌─────────────────┐
         │      WAS         │    YES      ┌──────────────────────┐  198
         │  LAST SOFTKEY    │────────────▶│  CALL DISPLAY PART    │
         │ SELECTED GREATER │             └──────────────────────┘
         │   THAN 2?        │
         └─────────────────┘
              │ NO
    ┌─────────────────────────────────────┐  200
    │ SET UP SOFTKEYS AND WAIT FOR         │
    │ OPERATOR TO SELECT A FUNCTION        │
    └─────────────────────────────────────┘
```

| 1 COUNT | 2 HI LOW | 3 ABSOLUTE | 4 | 5 | 6 PART | 7 ROTATE | 8 -ETC- |
|---------|----------|------------|---|---|--------|----------|---------|

|  202 | 204 | 206 | 208 | 210 | 212 |
|------|-----|-----|-----|-----|-----|
| COUNT THE NUMBER OF CURRENT PARTS CURRENTLY DISPLAYED ON THE SCREEN | ALLOW OPERATOR TO POSITION CURSOR ON ANY PART AND THEN DISPLAY HIGH OR LOW X & Y COORDINATES | LET OPERATOR POSITION THE CURRENT PART ANYWHERE ON SHEET BY SPECIFYING THE COORDINATES OF LOWER LEFT HAND CORNER OF PART | CALL PART | CALL ROTATE | RETURN |

# FIG.7

```
                                              ┌─────────────────────────┐ 164
                                              │ CALCULATE AND DISPLAY    │
                                              │ CURRENT SHEET UTILIZATION│
                                              └─────────────────────────┘
```

CALCULATE AND DISPLAY
CURRENT SHEET UTILIZATION — 164

SET UP SOFTKEYS AND WAIT FOR
OPERATOR TO SELECT A FUNCTION — 166

| LEFT | UP | DOWN | RIGHT | ERASE | | | -ETC- |

MOVE CURSOR 1 POSITION IN THE
DIRECTION SPECIFIED PROVIDED
THAT CURSOR WILL NOT BE MOVED
ENTIRELY OFF THE SCREEN. IF
ANY OF THESE BUTTONS ARE HELD
DOWN CONTINUOUSLY, THE CURSOR
WILL MOVE 1 DOT AT A TIME FOR
THE FIRST 15 DOTS. AFTER THAT,
THE CURSOR GETS MOVED 6 DOTS
AT A TIME TO SIMULATE HIGHER
SPEED. — 168

CALL ERASE — 170

172 — RETURN

# FIG. 8

IS CURSOR POSITIONED INSIDE OF A PART ON THE SCREEN? ⟋174

NO → DISPLAY ERROR MESSAGE "POSITION CURSOR INSIDE A PART" ⟋176

RETURN

YES

ERASE (TURN OFF DOTS) THE LINES ON THE SCREEN REPRESENTING THE PART ⟋178

REMOVE THIS PART FROM THE "POSITIONED PARTS" ARRAYS ⟋180

REDRAW THE SHEET AND ANY OTHER PARTS IN THE VICINITY IN CASE PORTIONS OF THEM WERE ERASED WHEN ERASING THE PART ⟋182

RETURN

## FIG. 9

```
┌─────────────────────────────┐
│ DISPLAY CURRENT PART NUMBER │ ⟋102
│ AND DIMENSIONS ON SCREEN    │
│ USING CURRENT PART INDEX    │
└─────────────────────────────┘
              │
              ▼
        ┌──────────┐
        │  RETURN  │
        └──────────┘
```

## FIG.10

```
┌─────────────────────┐
│   SWAP  CURRENT     │ ⟋132
│  PART DIMENSIONS    │
└─────────────────────┘
            │
            ▼
┌─────────────────────┐
│ CALL DISPLAY PART   │ ⟋134
└─────────────────────┘
            │
            ▼
      ┌──────────┐
      │  RETURN  │
      └──────────┘
```

## FIG. 11

```
                    124
        ╱────────────────────╲                    ┌──────────────────────────┐ 128
       ╱  IS CURRENT          ╲      NO            │ CURRENT PART INDEX =     │
      ⟨ PART INDEX = TO HIGHEST ⟩ ─────────────▶  │ CURRENT PART INDEX +1    │
       ╲ DEFINED PART INDEX?   ╱                   └──────────────────────────┘
        ╲────────────────────╱                                  │
              │ YES                                              │
              ▼                                                  │
     ┌──────────────────────┐ 126                               │
     │ CURRENT PART INDEX=0 │                                    │
     └──────────────────────┘                                    │
              │                                                  │
              │               ┌──────────────────────────────────┘
              ▼               ▼
     ┌──────────────────────┐ 130
     │  CALL DISPLAY PART   │
     └──────────────────────┘
              │
              ▼
        ┌──────────┐
        │  RETURN  │
        └──────────┘
```

## FIG.12

PUT CURRENT PART INDEX AND HIGH & LOW COORDINATES OF NEWLY POSITIONED PART INTO THE "POSITIONED PARTS" ARRAYS (PNUM, INUSE, LOWX, LOWY, HIGHX, HIGHY) — 116

DRAW THE PART ON SCREEN IN THE POSITION INDICATED — 118

RETURN

## FIG.13

DELETE, CREATE AND OPEN PRESELECTED FILE — 214

ANALYZE "POSITIONED PARTS" ARRAYS AND DETERMINE CORRECT ORDER FOR PARTS TO BE CUT FROM SHEET USING A RIGHT ANGLE SHEAR. GENERALLY, WORK FROM UPPER RIGHT TO LOWER LEFT CORNER OF SHEET. IF PARTS CAN BE CUT ACCEPTABLY IN BOTH THE X AXIS OR Y AXIS CHOOSE THE PART IN Y AXIS FIRST.* — 216

AS ORDER OF PARTS IS DETERMINED GENERATE THE N.C. CODE REQUIRED FOR AN N.C. SHEARING MACHINE TO PRODUCE THE APPROPRIATE CUTS. SAVE ALL GENERATED CODE IN THE PRESELECTED FILE SO THAT IT CAN BE EXECUTED BY THE N.C. MACHINE AT A LATER TIME. — 218

RETURN

# FIG. 14

EXAMPLE OF CUTTING ORDER

POSITION OF
RIGHT ANGLE SHEAR

| 21 | | 16 | 10 | 5 | 1 |
| 25 | 22 | 17 | 11 | 6 | |
| | | 18 | 12 | 7 | |
| | | 19 | 13 | 8 | 2 |
| 28 | 26 | 23 | 20 | 14 | 9 |
| 29 | 27 | | 24 | 15 | 3 |
| 30 | | | | | |
| 31 | | | | | 4 |

X=0
Y=0

CLAMPS